# EUROPEAN PATENT APPLICATION

(11) **EP 4 095 425 A1**
(43) Date of publication of application: **30.11.2022**
(21) Application number: 21212839.1
(22) Date of filing: 07.12.2021
(51) Int. Cl.: F16L 55/18, B29C 63/34

(54) **DEVICE FOR FAST CURING OF A TUBULAR INSERT IMPREGNATED WITH SYNTHETIC RESIN IN THE PROCESS OF PIPELINE REHABILITATION**

(30) Priority: 28.05.2021 SI 202100111
(71) Applicant: Techra d.o.o., 4294 Krize (SI)
(72) Inventor: Janc, Gregor, 4294 Krize (SI)
(74) Representative: Golmajer Zima, Marjanca

(57) **Abstract**

A device 1 for fast curing of a tubular liner impregnated with synthetic resin, comprising a substantially cylindrical housing 1, two sliding elements 7, 8 for guiding the device 1 within the tubular liner, a tubular liner temperature measuring device 15, the cylindrical housing 1 comprising at least one bed 21 on which at least one IR module 10 with at least one semiconductor laser diode 17 is arranged, the semiconductor laser diode being a VCSEL emitting IR electromagnetic waves.

## Description

### Subject of invention

The subject of the invention is a device for fast curing of a tubular liner impregnated with synthetic resin without catalysts such as photoinitiators in the process of pipeline rehabilitation.

### Technical problem

The technical problem is to configure a device that will allow fast curing of a tubular liner impregnated with synthetic resin, preferably a synthetic resin without catalysts such as photoinitiators, in the process of pipeline rehabilitation, wherein the heating of the device will be minimised so there is no requirement for an additional cooling device.

### Prior art

A process that does not require pipe replacement is often used to repair different types of pipelines, such as sewer and water pipes, which are installed horizontally or vertically and are located in hard-to-reach places. If such a pipeline is located in the ground, it is not necessary to excavate the damaged pipe. In this type of repair, a tubular liner made of fabric or non-woven fabric is inserted into the damaged pipe, the outer layer of which is impregnated with synthetic resin. The tubular liner is inserted into a pipe by a process known as inversion process, where the tubular liner is inverted like a sleeve as it penetrates the pipe. The tubular liner, with its first inwardly curved end, is attached to the mouth of a special pressure device called an inversion drum, whereby a closed space is created in the pressure device. The pressure device pushes pressurised air against the tubular liner, the air pushes the liner into the pipe to be rehabilitated and at the same time turns it so that the inner surface of the synthetic resin-impregnated tubular liner becomes the outer surface of same. The pressurised air simultaneously expands the tubular liner to rest on the inner surface of the pipe to be rehabilitated. The tubular liner so installed is then fixed to the inner surface of the pipe by curing the synthetic resin with which it is impregnated.

The curing of the synthetic resin, and thus the fixing of the tubular liner to the pipe to be repaired, is achieved and/or accelerated by heating the tubular liner or the synthetic resin. Epoxy resins, polyester resins and vinyl ester resins are used as the artificial resin with which the tubular liner is impregnated. The epoxy resin impregnated tubular liner is fixed to the wall of the pipe by heating in such a way that hot water or water vapour is passed through the tubular liner or pipe. Such heating requires special additional devices to provide sufficient quantities of hot water or water vapour. A further disadvantage of these processes is the slow curing of the epoxy resin, despite the supply of hot water or water vapour, which makes the process time-consuming and takes several hours. Throughout the curing period, in addition to the hot water or water vapour in the tubular liner, sufficient water or water vapour pressure must be provided to ensure constant contact between the tubular liner and the pipe to be repaired.

The fixation of the tubular liner, and thus the curing of the synthetic resin, is accelerated if the tubular liner, and thus the synthetic resin, are irradiated with UV electromagnetic waves. Such a process is described, inter alia, in patent application WO93/15131A2 (Chandler et al.). In this process, the tubular liner is impregnated with synthetic resin of polyester and vinyl ester resin types with catalysts in the form of photoionisers that react to UV electromagnetic waves. The resin-impregnated tubular liner is exposed to UV electromagnetic radiation emitted by a special device based on a vacuum tube. The device is directed through the tubular liner and the pipe. Irradiation of the synthetic resin-impregnated tubular liner with UV electromagnetic waves results in the evaporation of extremely noxious gases. Post-treatment of a pipe that has been repaired with a UV-fixed tubular liner, such as cut-out for a discharge outlet, produces noxious dust particles. A drawback of this type of curing is the UV radiation as such, which is carcinogenic and very harmful to humans. As these waves are invisible to the human eye, they are not perceived by the workers rehabilitating the pipes. These drawbacks make working with these types of tubular liners a health problem for workers.

Patent application EP 2129956 A1 (Moeslkaer, et al.) describes a device for curing a tubular liner based on the use of light emitting diodes, LEDs. LEDs provide constant energy emission throughout their lifetime, ensuring high efficiency compared to other lights. Their spectrum of radiation ranges from ultraviolet light, through the visible spectrum, to infrared light. In the case of radiation in the light spectrum, the radiation is visible to the human eye and is not noxious. Heating of the tubular liner with LEDs is only possible by using synthetic resins of the polyester and vinyl ester resin types with catalysts in the form of photoionisers which react to a certain type of electromagnetic wave. In order to achieve a satisfactory curing rate, the device must comprise a large number of LEDs, which results in a high heating of the device. Therefore, intensive cooling of the device must be ensured. Often, simply applying cold air is not enough and additional cooling elements, such as a fan, are needed.

A disadvantage of polyester resins and vinyl ester resins, with which the tubular liner must be impregnated in order to achieve faster curing, either with a UV or LED device, is high shrinkage on curing, up to 10 %. The shrinkage of the synthetic resin poses a major problem in the sizing of the tubular liner because the tubular liner must tightly fit the entire surface of the pipe after installation to ensure its tightness. In addition, polyester resins and vinyl ester resins are very noxious. In the event that the curing of a tubular liner impregnated with polyester or vinyl ester resin is not completed due to insufficient energy input, the resin will remain in a liquid state. The tubular liner does not fit the basic pipe, so the pipe may still leak. In addition, uncured resin seeps into the surrounding areas and dangerously pollutes the environment.

Unlike polyester resins and vinyl ester resins, epoxy resins are not noxious, have virtually no shrinkage during curing, high chemical and mechanical resistance and a long service life. An epoxy resin impregnated tubular liner cures after a sufficiently long time, even without additional energy input. This prevents the epoxy resin from seeping into the environment. The curing of the epoxy resin impregnated tubular liner is accelerated by heating with hot water or hot water vapour or hot air. Despite the heating, the curing of the epoxy resin impregnated tubular liner is still a lengthy and energy-consuming process and can take 3 to 6 hours. It is also ecologically problematic due to its huge water consumption.

There is therefore a need for a device which will allow rapid heating and thus rapid curing of a tubular liner impregnated with synthetic resin containing no catalysts in the form of photoinitiators, preferably an epoxy resin, whereby the heating of the device will not require the installation of additional cooling devices and the use of such a device will be harmless to health and the environment.

### Solution to the technical problem

The technical problem is solved by a device for fast curing of a tubular liner impregnated with synthetic resin, preferably epoxy resin, in the process of pipeline rehabilitation, the main characteristics are disclosed in the first independent claim.

The main characteristic of the device for rapid curing of a tubular liner impregnated with synthetic resin without a catalyst in the form of photoinitiators, preferably an epoxy synthetic resin, in a pipeline rehabilitation process is that it comprises at least one bed on which at least one IR module is arranged that comprises at least one semiconductor laser diode, preferably an even number of semiconductor laser diodes, wherein the semiconductor laser diode is preferably a front-surface emitting laser diode (VCSEL) emitting infrared (IR) electromagnetic waves having a wavelength in the range 780-1000 nm. The synthetic resin molecules are energised by the absorption/irradiation of IR electromagnetic waves, causing the molecules to vibrate more vigorously, thus heating the synthetic resin. In addition to the VCSEL, the IR module is equipped with a safety light in the form of a LED that emits visible light.

The device for fast curing of a tubular liner impregnated with synthetic resin further comprises a central part arranged in a cylindrical housing and formed as a multi-sided prism, a front flange and a rear flange, a casing attached to respective flange, both of which enclose the device, and two sliding elements arranged coaxially with respective flange and respective casing for guiding the device within the tubular liner.

A cooling air circuit is provided within the housing of the device, said circuit comprising an inlet pipe, cooling ribs and cooling vents. Additional cooling is provided by peripheral cooling ribs arranged around the circumference of respective casing.

According to a second embodiment, the device comprises, in addition to at least one bed, on which at least one IR module having at least one semiconductor laser diode is arranged, preferably an even number of semiconductor laser diodes, wherein the semiconductor laser diode is preferably a front-surface emitting laser diode (VCSEL), a mirror prism arranged coaxially with the cylindrical housing and distant from it, said prism having a central recess in the form of an inverted cone and a central hole. The distance is greater than the thickness of respective IR module which is arranged in the bed on the cylindrical housing; the front casing is in the form of a cover extending over the mirror prism and covering the central recess. The apex angle of the recess is 90°. The surface of the central recess and the central hole is coated with a reflective layer for IR electromagnetic waves. At least one VCSEL is arranged on respective IR module, preferably 10 to 100, more preferably 30 to 50.

The device further comprises a device for measuring the temperature of the tubular liner during heating, the device being implemented as a thermographic camera.

The surface emitting laser diodes (VCSEL or VCSE laser) allow the electromagnetic waves to be focused essentially to a point. As a result, the energy input at a particular spot is very high, causing very rapid heating and thus accelerated curing of the tubular liner at that spot. The possibility of precisely focusing the electromagnetic waves makes it possible to heat the part of the wall of the tubular liner that is impregnated with synthetic resin, which further contributes to improved efficiency.

Epoxy resins are virtually non-shrinking during curing and are harmless to health, making their use in tubular liners desirable. Their disadvantage is lengthy and energy-consuming curing. The device according to the invention, comprising at least one semiconductor laser diode, preferably at least one VCSEL, reduces the required heating and thus the curing time of the epoxy resin-impregnated tubular liner, so that the curing time is comparable to the curing time of tubular liners impregnated with polyester or vinyl ester resins with photoinitiators. The incorporation of VCSE lasers, which convert at least 60% of the energy into radiation, the remainder being heat, makes the device and thus the process of heating and curing the tubular liner significantly less energy-intensive than the well-known process of heating and curing the tubular liner with hot water, as well as the device and the process of heating with LEDs. This positive ratio results in lower heating of the device, which also requires simpler cooling. For cooling the device according to the invention, it is sufficient to circulate cold air under pressure through or around the device. Sufficient cooling is also achieved by choosing a suitable material capable of dissipating excess heat. Therefore, there is no need to install additional cooling devices such as fans.

A very important feature of the device according to the invention is the use of IR electromagnetic waves, which are completely harmless to health. Therefore, the device and the curing process with the epoxy resin impregnated tubular liner in a pipe are safe to use.

As no hot water or water vapour is used for heating, the curing of the tubular liner with the device according to the invention is also more ecologically acceptable.

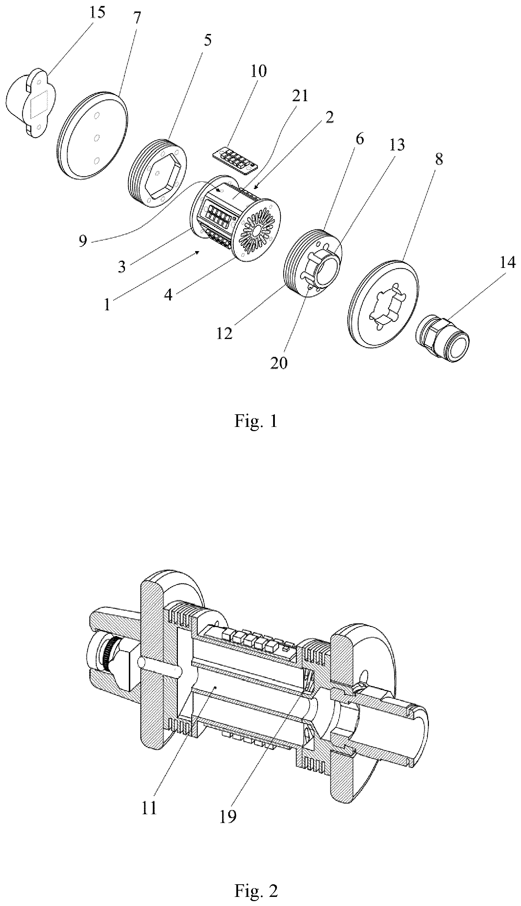

The device for fast curing of synthetic resins according to the invention will be described in more detail below by way of two embodiments and drawings representing in
Fig. 1 first embodiment of a device for fast curing of a tubular liner, exploded view
Fig. 2 longitudinal cross-section of the device for fast curing of a tubular liner according to Fig. 1
Fig. 3 IR-module of the device for fast curing of a tubular liner according to a first embodiment
Fig. 4 second embodiment of a device for fast curing of a tubular liner

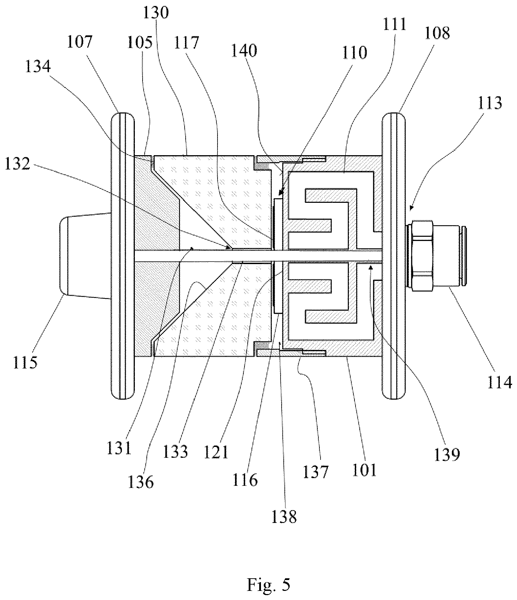

Fig. 5 the device for fast curing of a tubular liner according to Fig. 4, longitudinal cross-section

The relative terms front, rear are defined in the description in terms of the use of the device for fast curing device of a tubular liner when the latter is in a functional state. The front part of the device is the part that is furthest away from the operator during use. The rear part of the device is the part that is closest to the operator during use and is directly connected to a push pipe.

According to a first embodiment, a device 50 for fast curing of a synthetic resin-impregnated tubular liner comprises
- a substantially cylindrical housing 1 with a central part 2, a front flange 3 and a rear flange 4,
- a casing 5, 6 fastened to a respective flange 3, 4,
- two sliding elements 7, 8 arranged coaxially to a respective flange and a respective casing for guiding the device 50 within a tubular liner,
- a tubular liner temperature measuring device 15 fixed to the front sliding element 7.

The central part 2 of the housing 1 is formed as a hollow polyhedral prism, the number of faces 9 being at least three. The number of faces 9 depends on the size of the device 50 or the size of the pipe to be repaired and the curing time to be achieved. Respective face 9 has a bed 21 on which an IR module 10 is mounted. The IR module 10 will be described in more detail below. In the central part 2 of the housing 1, there is a tubular element 11 axially arranged for the supply of cooling air and cooling ribs 19 extending radially from the tubular element 11 towards the circumference of the central part 2 of the housing 1 along the entire length of the central part 2 of the housing 1 up to a respective flange 3, 4. The housing 1 is closed at the front side by the front casing 5 and closed at the rear side by the rear casing 6, respective casing 5, 6 being screwed to a respective flange 3, 4. Respective casing 5, 6 has circumferentially arranged cooling ribs 12 for additional heat dissipation.

The cylindrical housing 1 is made of a material with a very high thermal conductivity, preferably a metallic material, more preferably copper and its alloys.

A respective sliding element 7, 8, the diameter of which corresponds essentially to the diameter of the pipe to be repaired, is arranged on a respective front flange 3 and rear flange 4. The front 7 and rear sliding element 8 allow the device 50 to be guided within the tubular liner. The tubular liner temperature measuring device 15 is arranged on the front surface of the front sliding element 8. In the embodiment, the tubular liner temperature measuring device 15 is a thermographic camera.

The rear casing 6 comprises a connecting piece 13 which extends through the rear sliding element 8 and receives a coupling-connecting element 14 in the form of a quick coupler. A push-pull hose (not shown) is connected to the fast curing device 50 by means of the coupling-connecting element 14, through which hose a supply line for the IR modules 10 and the tubular liner temperature measuring device 15, a conduit for supplying pressurised cooling air connected to a device for generating pressurised air, and a communication conduit connecting the tubular liner temperature measuring device 15 to a control device (not shown) are led into the housing 1. The control device controls the speed of movement of the device 50 within the tubular liner as a function of the measured temperature of the tubular liner by means of a speed control device (not shown).

On respective bed 21 of the central part 2 of the housing 1 there is arranged an IR module 10 comprising a carrier plate 16, on which semiconductor laser diodes 17, preferably front surface emitting laser diodes (VCSELs), are arranged. VCSELs are laser diodes that emit laser light perpendicularly to the top surface rather than from the side of the silicon wafer, which significantly increases their efficiency. At least one VCSEL 17, preferably an even number of VCSELs that are electrically connected in series, is arranged on each IR module 10. The number of VCSELs 17 on each IR module 10 depends on the required heating rate of the tubular liner and the size of the tubular liner. In the embodiment, ten VCSELs 17 are arranged on a single IR module. VCESLs 17 emit electromagnetic waves with a wavelength of 780-1000 nm, which is in the IR region. For this purpose, a safety light 18 in the form of a visible light emitting LED is also provided on the IR module 10. The safety light 18 is an indicator of the operation of the IR module 10. The IR modules 10 are connected in series with each other and are powered via a power supply guided in the push-pull tube. The carrier plate 16 of the IR module 10 is made of an electrically conductive material such as metallic electrically conductive materials, preferably an aluminium alloy.

The heating of the device 50 due to the operation of the VCSEL is relatively small, but the device 50 is also heated due to the heat transfer from the tubular liner being heated back to the device 50. This is why the device 50 needs to be cooled. Cooling is carried out by pressurised cooling air supplied to the device 50 through a cooling conduit arranged in the push-pull pipe. A stream of cooling air passes through the tubular element 11 of the central part 2 of the housing, turns at the front casing 5 and returns to the rear part of the device, flowing across the cooling ribs 19, and exits the device 50 through the cooling openings 20 of the rear casing 6 into the pipe to be rehabilitated. Cooling of the device with additional cooling elements, such as retrofitted fans, is not necessary.

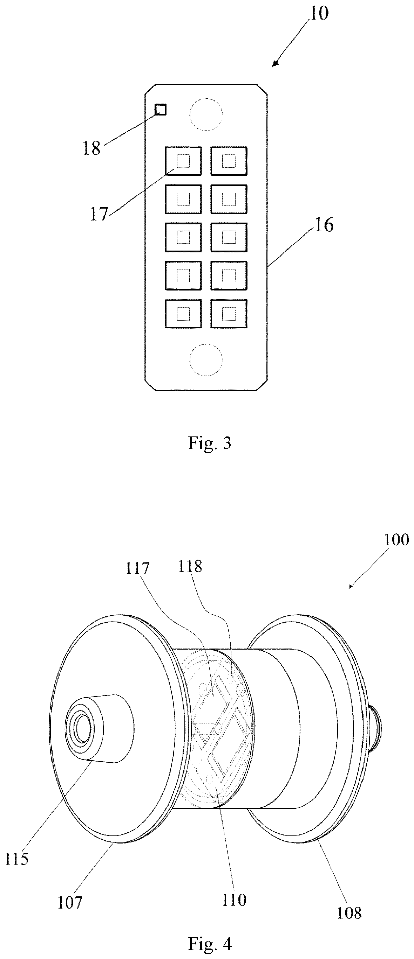

According to a second embodiment, a device 100 for fast curing of a synthetic resin-impregnated tubular liner, which is shown in Figure 4, comprises
- a substantially cylindrical housing 101 with at least one bed 121, on which there is arranged at least one IR module 110 with at least one semiconductor laser diode 117, preferably a front surface emitting laser diode (VCSEL);
- a mirror prism 130 arranged coaxially with the cylindrical housing 101 and having a central recess 131 in the form of an inverted cone,
- a front casing 105 in the form of a cover extending over the mirror prism 130 and covering the central recess 131,
- a tubular liner temperature measuring device 115 is fixed to the front cover 105,
- two sliding elements 107, 108.

On the front side of the cylindrical housing 101 there is a mirror glass prism 130 arranged coaxially with the central recess 131 in the form of an inverted cone with an apex angle of 90°. The central recess 131 which is open towards a front side 134 of the mirror prism, continues at its apex 132, directed towards the rear face of the device 100, into a central through hole 133. The central recess 131 is tightly closed at the front part of the mirror prism 130 by the front casing 105 in the form of a cover. A cylindrical housing 101 and the mirror prism 130 are interconnected by a mounting ring 137 that creates a gap 138 between them and at the same time tightly closes it. The gap 138 created by the mounting ring 137 is greater than the thickness of a respective IR module 110 arranged on the cylindrical housing 101. The surface of the central recess 131 and the central hole 133 is coated with a reflective layer for the IR electromagnetic waves, so that the IR waves produced by the VCSELs are reflected on these surfaces and travel through the prism 130 and out of the prism to the tubular liner (not shown), where they heat the epoxy resin. The central hole 133 is also a guide for the supply conduit of the tubular liner temperature measuring device 115.

At least one IR module 110 comprising a carrier plate 116 on which at least one semiconductor laser diode 117, preferably a front surface emitting laser diode (VCSEL), is arranged at a gap 138 between the cylindrical housing 101, at its front face 140, and the mirror prism 130. VCSELs are laser diodes that emit laser light perpendicularly to the top surface rather than from the side of the silicon wafer, which significantly increases their efficiency. At least one VCSEL 117 is arranged on the IR module 110, preferably 10 to 100, more preferably 30 to 50. In a second embodiment, 40 VCSELs are arranged on a single IR module 110. The VCSELs are electrically connected in series. The number of IR modules 110 can be at least one, preferably two or even more. The number of IR modules 110 and VCSELs 117 depends on the desired heating and thus curing rate of the epoxy resin impregnated tubular liner. The carrier plate 116 is made of a thermally and electrically conductive material such as a metallic thermally and electrically conductive material, preferably an aluminium alloy.

On the front side of the cover 105, there is arranged the tubular liner temperature measuring device 115, which is a thermographic camera in the second embodiment.

The cylindrical housing 101 has a central through hole 139 which receives a coupling-connecting element 114 in the form of a quick coupler at the rear face of the cylindrical body 101. A push-pull tube (not shown) is connected to the fast curing device 100 by the coupling-connecting element 114, which also contains the supply conduit for the IR modules 110 and the tubular liner temperature measuring device 115.

The prism 130 incorporated in the device 100 achieves a very homogeneous beam of IR electromagnetic waves, resulting in a reduced number of VCSELs required. The heating of the device 100 is very low. The device is cooled indirectly through the cylindrical housing 101 made of a highly thermally conductive material, preferably a metallic thermally conductive material such as a copper alloy. If necessary, air cooling may also be provided by arranging a cooling duct 111 within the cylindrical housing to allow cold air to flow through the cylindrical housing 101. Water cooling is also possible by surrounding the cylindrical housing with a cooling pipe into which a refrigerant, such as cooling water, is supplied.

The heating of the epoxy resin impregnated tubular liner is achieved by irradiation with IR electromagnetic waves emitted by the VCSELs and propagating in an essentially flat beam axially from the VCSELs towards the cover 105 through the mirror prism 130. On an inclined face 136 of the mirror prism 130, which is coated with an IR electromagnetic waves reflecting layer, the IR electromagnetic waves are mirror-reflected at an angle of 90° towards the tubular liner to be heated. The tubular liner is heated due to being irradiated by IR electromagnetic waves. Due to the high power output of VCSELs, the tubular liner is heated very quickly to the required temperature over a surface area equal to the cross-sectional area of the wave beam. As a result, also the tubular liner cures rapidly. The heating rate, and hence the curing rate, of the tubular liner is controlled by the tubular liner temperature measuring device 115 connected by a control line to an external control device. The control device, depending on the measured temperature, controls the feeding device which regulates the speed at which the device 100 of the invention moves inside the tubular liner and the tube to be rehabilitated.

## Claims

1. A device for fast curing of a tubular liner impregnated with synthetic resin, comprising
- a substantially cylindrical housing,
- two sliding elements for guiding the device within the tubular liner,
- a tubular liner temperature measuring device,
**characterized in that** the cylindrical housing (1, 101) comprises at least one bed (21, 121), on which at least one IR module (10, 110) is arranged.

2. The device according to claim 1, **characterized in that** the IR module (10, 110) comprises at least one semi conductive laser diode (17, 117).

3. The device according to claim 2, **characterized in that** the IR module (10, 110) preferably comprises an even number of semi conductive laser diodes (17, 117).

4. The device according to claim 2 or 3, **characterized in that** the semi conductive laser diode (17, 117) is a VCSE laser irradiating IR electromagnetic waves with a wavelength of 780-1000 nm.

5. The device according to any preceding claim, **characterized in that** a safety light (18, 118) in the form of a LED that emits visible light is arranged on the IR module (10, 110).

6. The device according to any preceding claim, **characterized by** comprising
- a central part (2) formed as a polyhedral prism and arranged within the cylindrical housing (1, 101),
- a front flange (3) and a rear flange (4),
- a casing (5, 6) fastened to a respective flange (3, 4), both casings closing the device (50),
- two sliding elements (7, 8) arranged coaxially to a respective flange (3, 4) and a respective casing (5, 6) for guiding the device (50) within a tubular liner.

7. The device according to claim 6, **characterized in that** a cooling air circuit is provided within the housing (1), said circuit comprising an inlet pipe (11), cooling ribs (19) and cooling vents (20).

8. The device according to any preceding claim, **characterized in that** respective casing (5, 6) has circumferentially arranged cooling ribs (12) for additional heat dissipation.

9. The device according to any preceding claims 1 to 5, **characterized by** comprising
- a mirror prism (130) arranged coaxially with the cylindrical housing (101) and at a gap (138) and having a central recess (131) in the form of an inverted cone and a central hole (133), the gap (138) being greater than the thickness of a respective IR module (110) arranged in the bed (121) on the cylindrical housing (101),
- a front casing (105) in the form of a cover extending over the mirror prism (130) and covering the central recess (131).

10. The device according to claim 9, **characterized in that** the apex angle of the recess (131) is 90°.

11. The device according to claim 9 or 10, **characterized in that** the surface of the central recess (131) and the central hole (133) is coated with a reflective layer for IR electromagnetic waves.

12. The device according to any preceding claim 9 to 11, **characterized in that** at least one VCSEL (117), preferably 10 to 100, more preferably 30 to 50, is arranged on a respective IR module (110).

13. The device according to any preceding claim, **characterized in that** the tubular liner temperature measuring device (15, 115) is a thermographic camera.
